# EUROPÄISCHE PATENTSCHRIFT

(11) **EP 0 402 622 B1**
(45) Veröffentlichungstag und Bekanntmachung des Hinweises auf die Patenterteilung: **27.10.1993**
(21) Anmeldenummer: 90108685.0
(22) Anmeldetag: 09.05.1990
(51) Int. Cl.: B60R 21/32

(54) **Zündeinrichtungen für Schutzvorrichtungen in Fahrzeugen**
Ignition device for safety systems in vehicles
Dispositif de détonation pour systèmes de sécurité dans des véhicules

(30) Priorität: 14.06.1989 DE 3919376
(43) Veröffentlichungstag der Anmeldung: 19.12.1990
(73) Patentinhaber: DAIMLER-BENZ AKTIENGESELLSCHAFT, 70327 Stuttgart (DE)
(72) Erfinder: Mickeler, Reinhold, D-7038 Holzgerlingen (DE); Bossenmaier, Alban, D-7046 Gäufelden 1 (DE); Petri, Volker, D-7042 Aidlingen 3 (DE)

(56) Entgegenhaltungen:
- EP-A- 0 283 737
- DE-A- 2 413 240
- US-A- 4 158 191
- US-A- 4 686 903

## Beschreibung

Die Erfindung geht aus von einer Zündeinrichtung für Schutzvorrichtungen in Fahrzeugen nach der Gattung des Anspruchs 1.

In Kraftfahrzeugen werden pyroelektrische Zündelemente zur Auslösung von Schutzeinrichtungen vorgesehen, so beispielsweise zur Auslösung von Gurtstraffer- oder Airbag-Systemen. Solche Zündelemente beinhalten niederohmige Schmelzdrahtbrücken und einen letztere umschließenden bzw. einbettenden chemischen Zündstoff. Wird der Schmelzdraht von einem ausreichenden Strom durchflossen, so erhitzt er sich auf eine Temperatur, bei der der Zündstoff gezündet wird.

Nachteilig bei diesen Zündelementen ist, daß schon bei Anlegen verhältnismäßig kleiner Spannungen - etwa durch in der Autoelektrik übliche Stromkreisprüfer - ihre Zündung bewirkt werden kann. Durch versehentlich falsches Anklemmen der Zuleitungsdrähte oder Anlegen der Fahrzeugbordspannung im Zuge fahrlässigen Hantierens kann eine Zündung ebenfalls ungewollt geschehen; im Falle der ungewollten Auslösung eines Airbags können Sachschäden oder ein Unfall die Folge sein.

Aufgabe der Erfindung ist es daher, eine einfache Zündeinrichtung zu schaffen, welche diese Nachteile nicht aufweist und eine hohe Eigensicherheit gegenüber ungewollter Zündauslösung bietet.

Diese Aufgabe wird bei einer gattungsgemäßen Zündeinrichtung mit den kennzeichnenden Merkmalen des Anspruchs 1 gelöst. Sie umfaßt das eigentliche pyroelektrische Zündelement und ein mit diesem in Reihe geschaltetes Schaltbauteil, das von einem ebenfalls umfaßten elektronischen Schloß zur Bestromung des Zündelements ansteuerbar ist; alle Teile sind in einem einkörperlichen Bauelement vereint.

Nur dann, wenn bei Anliegen an der so beschaffenen Zündeinrichtung eines Zündsignals bereits ein zusätzliches Entriegelungssignal anlag und das elektronische Schloß "öffnete", wird das Zündelement bestrombar.

Die erfindungsgemäße Einrichtung bietet somit eine sehr hohe Sicherheit gegen Fehlauslösung, da zwei für die Auslösung des Zündelements erforderliche Signale an der erfindungsgemäßen Zündeinrichtung anliegen müssen, um deren Funktion überhaupt zu ermöglichen.

Vorteilhafte Weiterbildungen sind nach Lehre der Unteransprüche gegeben. So ist der Zeitverlauf des Entriegelungssignals vorzugsweise in einer die Öffnung des elektronischen Schlosses bewirkenden Weise codiert. Das Entriegelungssignal kann unabhängig vom Zündsignal, leitergebunden oder leiterungebunden, oder zusammen mit dem Zündsignal der Zündeinrichtung zugeführt werden.

Zur Öffnung des elektronischen Schlosses kann das Entriegelungssignal z.B. einen Code in Form einer gewissen Impulsfolge (digitaler Code) beinhalten. Das elektronische Schloß kann auch auf eine Codefrequenz ansprechen.

Zur Versorgung sowohl des elektronischen Schlosses als auch des Schaltbauelements mit Betriebsenergie können wenigstens eine, vorzugsweise beide Zündleitungen benutzt werden. Auch kann die reaktive Zündsubstanz mit einem das elektronische Schloß realisierenden Siliziumchip unmittelbar verbunden sein. In diesem Falle kann z.B. auch ein ohnehin vorhandener, u.U. besonders ausgeformter und/oder verlegter Bonddraht als Schmelzdrahtbrücke vorgesehen sein.

Vier Ausführungsbeispiele der erfindungsgemäßen Zündeinrichtung sind in der Zeichnung dargestellt und in der nachfolgenden Beschreibung näher erläutert. Es zeigen:
- Figur 1: eine erfindungsgemäße Zündeinrichtung mit unabhängiger Ansteuermöglichkeit durch ein Entriegelungs- und Zündsignal;
- Figur 2: eine erfindungsgemäße Zündeinrichtung mit besonderer Stromversorgung des elektronischen Schlosses;
- Figur 3: eine weitergebildete Zündeinrichtung, die an einem herkömmlichen Steuergeräteausgang betreibbar ist und eine der beiden Zündleitungen des Zündelements zum Bezug ihrer Betriebsenergie mitbenutzt;
- Figur 4: eine weitergebildete Zündeinrichtung, die an einem modifizierten Steuergeräteausgang betreibbar ist und ihre Betriebsenergie über beide Zündleitungen des Zündelements bezieht.

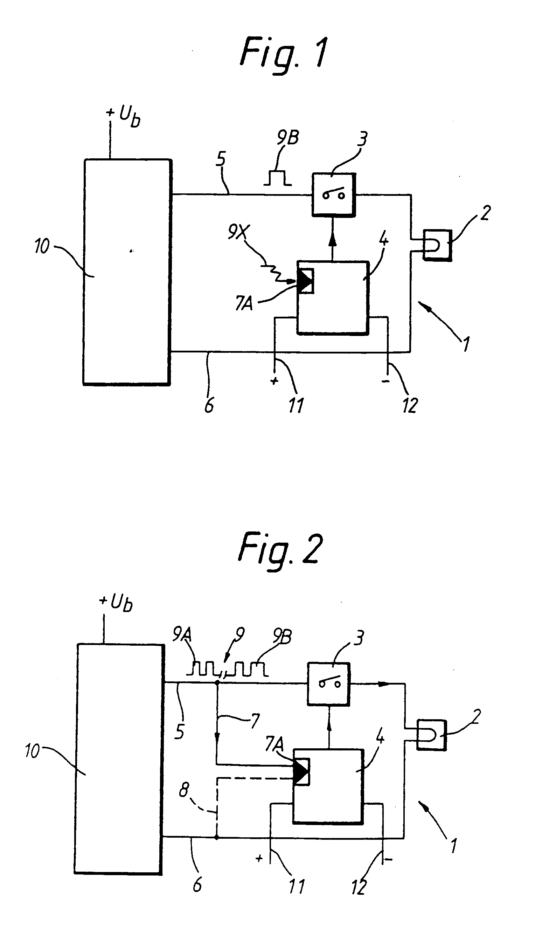

Gemaß **Figur 1** umfaßt die erfindungsgemäße Zündeinrichtung 1 wenigstens den eigentlichen pyroelektrischen Zünder 2, ein elektronisches Schloß 4 mit Entriegelungseingang 7A und einen von diesem Schloß ansteuerbaren elektrischen Schalter 3. Dem elektronischen Schloß wird über Leitungen 11 und 12 Betriebsenergie zugeführt. Der Eingang 7A kann ein elektrischer, optischer, ein radiofrequenter oder ein auf bestimmte Schallwellen ansprechender sein. Er kann leitergebunden oder leiterungebunden ein Entriegelungssignal 9X empfangen, dessen Diskriminierung bzw. Dekodierung im elektronischen Schloß die Öffnung des Schalters 3 für ein Zündsignal 9B über Leitungen 5 und 6 vom Zündauslösegerät 10 bewirkt. Das elektronische Schloß kann z.B. ein "digitales", d.h. auf bestimmte Impulse und deren Dauer und/oder Sequenz, oder aber ein auf eine bestimmte Frequenz einer anliegenden Wechselgröße ansprechendes sein.

Im folgenden wird anhand des Ausführungsbeispiels gemäß **Figur 2** zunächst von einer digitalen Realisierung ausgegangen.

Das Zündelement 2 verfügt über zwei Zündleitungen 5 und 6, wobei in die eine, hier in die Leitung 5, ein elektrisch steuerbarer Schalter 3 eingefügt ist. Bei durchgeschaltetem Schalter 3 ist das Zündelement 2 von einem Steuergerät 10 über die Zündleitungen 5 und 6 bestrombar. Bei dem Steuergerät kann es sich z.B. um ein Auslösegerät für einen Gurtstraffer oder einen Airbag handeln. Bei zunächst noch offenem Schalter 3 kann das elektronische Schloß 4 über seinen Eingang 7A und dessen Empfangsleitung 7 von der Leitung 5 ein Entriegelungssignal in Form eines seriellen Impulscodes 9 empfangen, welcher vom Steuergerät 10 zur Aktivierung des Zündelements 2 auf die Leitung 5 ausgegeben wird. Stimmt der Entriegelungsteil 9A des empfangenen seriellen Impulscodes 9 mit dem spezi fischen Ansprechcode des elektronischen Schlosses 4 überein, steuert das Schloß 4 den Schalter 3 an, so daß dieser schließt und ab diesem Zeitunkt somit weitere Signalanteile 9B des Impulscodes 9 das Zündelement 2 beaufschlagen können. Beispielsweise kann also das letzte (d.h. ein einziges) übermitteltes Bit 9B des seriellen Signals 9 auf der Leitung 5 die erforderliche zeitliche Länge aufweisen ("Langbit"), um ein für eine ausreichende Erhitzung einer Schmelzdrahtbrücke hinreichendes Stromintegral an den Zünder 2 zu liefern.

Ein oder mehrere Bestromungsimpulse 9B können dieselbe oder eine andere Amplitude als die vorausgegangenen Impulse zur Öffnung des Schlosses aufweisen. Ohne Beschränkung der Allgemeinheit kann im Steuergerat 10 z.B. das/die letzte/n, zur Bestromung des Zündelements 2 vorgesehene Bit/s 9B aus einer Spannungsquelle mit besonders niedrigem Innenwiderstand bereitgestellt werden, während die Codeimpulse 9A bis zur Schließansteuerung des Schalters 3 aus einer anderen Quelle im Steuergerät 10 stammen können.

Im Falle eines frequenzabhängig reagierenden Schlosses 4 kann ein vom Steuergerät ausgegebenes kombiniertes Entriegelungs- und Zündsignal aus einer Wechselspannung bzw. einem Wechselstrom vorbestimmter Frequenz bestehen. Dieses Signal wird nur dann auf den Zünder durchgeschaltet, wenn ein Diskriminator eine Übereinstimmung besagter Frequenz mit einer im elektronischen Schloß 4 gespeicherten Ansprech- bzw. Vergleichsfrequenz bzw. -periodendauer festgestellt hat. Dazu enthält das elektronische Schloß 4 vorzugsweise eine Vergleichsschaltung, die wenigstens eine intern soft- oder hardwaremäßig definierte Zeitkonstante mit der Periodendauer eines beaufschlagenden Zündsignals auf Übereinstimmung innerhalb gewisser erlaubter Fehlerschranken vergleicht.

Der steuerbare Schalter 3 kann als bipolarer oder MOS-Transistor, als Thyristor oder auch als Relais ausgeführt sein. Die gestrichelte Verbindung 8 symbolisiert eine Referenzpotentialbrücke für die das Entriegelungssignal 9A auswertende Eingangsschaltung 7A des elektronischen Schlosses 4, sofern dieses, wie hier gezeigt, über besondere Versorgungsanschlüsse 11 und 12 von einer separaten, mit dem Steuergerät nicht in Verbindung stehenden Betriebsspannung versorgt wird.

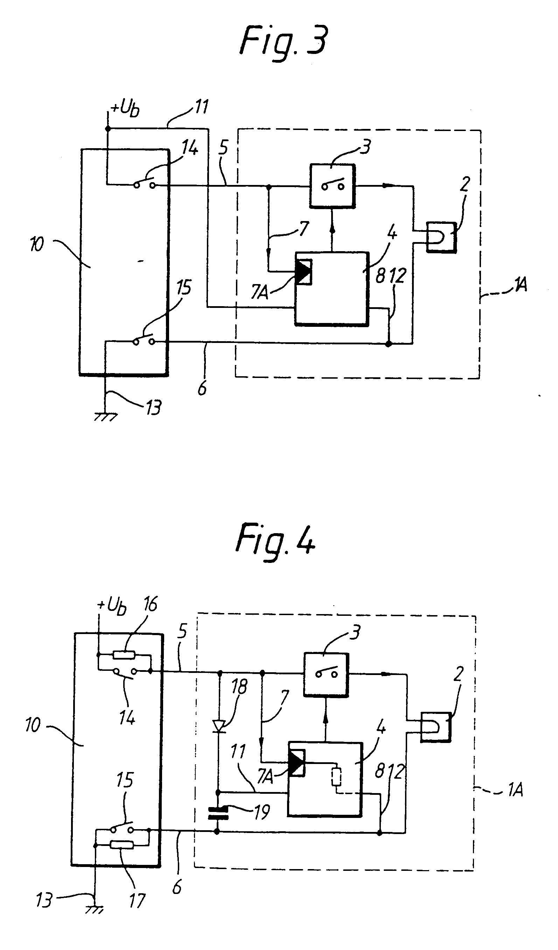

Gemaß **Figur 3** kann zur Energieversorgung des elektronischen Schlosses 4 einer vorzugsweise einhäusig ausgeführten Zündeinrichtung 1A auch die eine der zwei Zündleitungen benutzt werden; diese Möglichkeit erweist sich als zweckmäßig beispielsweise bei einer Insassenschutzvorrichtung in einem Kraftfahrzeug. Bei Steuergeräten für Airbag- oder Gurtstrafferauslösung sind die Zündleitungen 5 und 6 im Ruhezustand in der Regel freigeschaltet, führen dann also kein Potential. Im Aktivierungsfalle verbindet ein mechanisch betätigter Schalter 15 den Zünder 2 über die Leitung 6 mit dem ersten Pol des Bordnetzes, etwa mit Masse 13. Ein von einer nicht gezeigten Auswerteschaltung im Steuergerät 10 angesteuerter elektronischer Schalter 14 verbindet zugleich das Zündelement 2 über die Leitung 5 mit dem zweiten Pol +U_{b} des Bordnetzes.

Insoweit wird das elektronische Schloß 4, und somit auch der Steuerkreis des Schalters 3, durch eine fest mit dem zweiten Pol +U_{b} der Bordspannungsversorgung verbundene dritte Zuleitung 11 mit Strom versorgt. Dazu wird sowohl das Bezugspotential für den zu empfangenden Entriegelungscode als auch der Betriebsstrom des elektronischen Schlosses 4 über einen gemeinsamen Anschluß 812 desselben von der masseseitigen Zündleitung 6 bezogen, d.h., sobald die Zündleitung 6 über den mechanisch aktivierbaren Schalter 15 im Steuergerat 10 an Masse gelegt ist. Eine rechtzeitige Betriebsbereitschaft des elektronischen Schlosses 4 ist gewährleistet, wenn sichergestellt ist, daß der mechanisch betätigte Schalter 15 jedenfalls vor dem Schalter 14 schließt, was bei dieser Art von Steuergeräten in der Regel gegeben ist. Unter dieser Voraussetzung ist das elektronische Schloß 4 beim Eintreffen des ersten Entriegelungssignalbestandteils bereits empfangsbereit.

**Figur 4** veranschaulicht eine weiter abgewandelte Zündeinrichtung 1A. Das elektronische Schloß wird hier über beide Zündleitungen 5 und 6 mit der notwendigen Betriebsenergie versorgt. Dies kann auf drei verschiedene Weisen geschehen.

Im ersten Falle sind die Schalter 14 und 15 durch hochohmige Widerstände 16 bzw. 17 überbrückt. Diese sind so dimensioniert, daß bei offenen Schaltern 14 und 15 zwar ein zur Zündung erforderlicher Strom nicht fließen kann, daß jedoch ein ausreichender statischer Betriebsstrom fließen kann, um die Schaltung des elektronischen Schlosses (beispielsweise in sehr stromsparender CMOS-Technik ausgeführt) mit Betriebsstrom zu versorgen. Weil jedoch die Schaltung des elektronischen Schlosses 4 im Augenblick der Ansteuerung des Schalters 3 einen höheren Strombedarf aufweisen kann als er dem über die Widerstände 16 und 17 vom Bordnetz beziehbaren Standby-Betriebsstrom entspricht - etwa, weil eine gewisse Steuerleistung an den Schalter 3 abgegeben werden muß -, wird das mit der einen Zündleitung 6 verbundene elektronische Schloß 4 nicht unmittelbar aus der anderen Zündleitung 5 gespeist. Vielmehr erhält es seinen Betriebsstrom aus einem Energiespeicher in Form des Kondensators 19, welcher von der Zündleitung 5 über ein Entkopplungsbauelement, vorzugsweise eine in Durchlaßrichtung gepolte Diode 18, beständig Ladung bezieht.

Die Diode 18 verhindert, daß bei fehlerhaftem Schalten des Schalters 3 sich der Kondensator 19 über den Zünder 2 entladen, d.h. die kapazitiv gespeicherte Energie den Zünder auslösen kann. Außerdem ist durch die so bewirkte Rückwärtsisolation des Versorgungseinganges 11 gegenüber der Zündleitung 5 eine noch kurzzeitige Stromversorgung des elektronischen Schlosses 4 und des Steuereinganges des Schalters 3 aus dem Kondensator 19 unter allen Bedingungen gewährleistet insbesondere auch dann, wenn z.B. unfallbedingt das Bordnetz bereits zusammengebrochen und deshalb auch das Steuergerät 10 nur noch aus der Ladung eines in ihm enthaltenen, entsprechenden Speicherkondensators betreibbar ist, aus welcher Ladung dann ggfs. auch die Zündenergie bezogen wird. Diese Funktion kann in ausreichendem Maße jedoch auch erfüllt werden, wenn die Diode 18 durch einen Widerstand ersetzt wird, der in Abhängigkeit von den Widerständen 16 und 17, von der Betriebsspannung des Steuergerätes 10, sowie vom statischen Ruhestrombedarf des elektronischen Schlosses 4 und von der Kapazität des Kondenstors 19 geeignet ausgelegt ist.

Im zweiten Falle entfällt der Widerstand 16. Es ist dann beispielhaft vorgesehen, daß das Steuergerät 10 im Aktivierungsfalle, d.h. nach dem Schließen des Schalters 14, vor der Aussendung des seriellen Impulscodes 9 einen "längeren" Spannungsimpuls aussendet, wodurch der Kondensator 19 bis zum Beginn des Impulscodes 9A so weit aufgeladen wird, daß er die zur anschließenden Decodierung des Zündsignals und zur Ansteuerung des Schalters 3 benötigte Betriebsenergie lange genug zur Verfügung stellen kann.

Im dritten Falle wird die Zündeinrichtung 1A auch im Standby-Betrieb mit einer Wechselspannung versorgt.

Dies ist möglich, weil die Diode 18 dieselbe gleichrichtet und somit als Betriebsspannung des elektronischen Schlosses am Kondensator 19 jedenfalls immer eine Betriebsgleichspannung zur Verfügung stellt. Dazu kann wenigstens einer der Widerstände 16 und 17, welche die Einrichtung mit einem geringen Ruhebetriebsstrom beaufschlagen, prinzipiell auch durch einen Kondensator ersetzt sein. Über einen solchen Kondensator wird dann die Zündeinrichtung 1A anstatt von der Betriebsspannung +U_{b} von einer besonderen Wechselstrom-/-spannungsquelle (als nicht gezeigter Bestandteil des Steuergerätes 10) wenigstens mit Ruhebetriebsleistung versorgt, und zwar wahlweise mit gleicher oder sich von der Zündauslösefrequenz unterscheidender Frequenz.

Die Erfindung beinhaltet weiter, den gesteuerten Schalter 3 und das elektronische Schloß 4 und ggfs. auch die Diode 18 monolithisch auszuführen und insoweit auf einem gemeinsamen Halbleiterchip zu integrieren und letzteren in sehr geringer Entfernung vom Zünder 2 - vorzugsweise zusammen mit diesem in einem gemeinsamen Gehäuse - zu integrieren. Weiter umfaßt die Erfindung, einen besonderen Anschluß eines solchen Halbleiterchips, beispielsweise in Form eines geeignet beschaffenen und geführten und mit Zündstoff verbundenen bzw. in Zündstoff gelagerten Bonddrahtes, als Schmelzleiter des Zünders 2 zu benutzen, und insoweit einen Halbleiterchip bzw. wenigstens dessen gebondete Verdrahtung unmittelbar mit einer zündfähigen Substanz in geeigneter Weise zu einem elektronischen Sicherheitszünder 1A mit nur zwei Anschlußleitungen 5 und 6 zu integrieren.

Die Erfindung beinhaltet weiter, das elektronische Schloß insbesondere einer Zündeinrichtung mit unabhängiger, leiter- oder leiterungebundener Ansteuerbarkeit durch ein Zünd- und Entriegelungssignal so auszubilden, daß ein Zündsignal 9B den elektrischen Schalter 3 nur während einer relativ kurzen, definierten Dauer nach Empfang eines Entriegelungssignals 9X öffen kann und hernach nicht mehr. Dadurch wird die Sicherheit gegen Fehlauslösungen weiter erhöht.

## Patentansprüche

1. Zündeinrichtung für Schutzvorrichtungen in Fahrzeugen, mit einem pyroelektrischen Zündelement, welches einen durch Stromfluß erhitzbaren Schmelzleiter und einen damit in thermischem Kontakt stehenden Zündstoff enthält, mit wenigstens zwei Zündanschlüssen,
**dadurch gekennzeichnet**,
daß sie weiter umfaßt
- einen elektrisch steuerbaren Schalter (3), dessen Schaltstrecke mit besagtem Schmelzleiter in Serie geschaltet ist;
- ein elektronisches Schloß (4), dessen Ausgang mit dem Steuereingang besagten Schalters wirkverbunden ist,
- wobei der Schalter (3) von besagtem elektronischen Schloß (4) im Sinne einer Durchschaltung seiner Schaltstrecke ansteuerbar ist, wenn spätestens bei Beaufschlagung der Einrichtung (1, 1A) mit einem zur Aktivierung des Schmelzleiters vorgesehenen Zündsignal (9B) ein Entriegelungssignal (9X; 9A) an das elektronischen Schloß (4) übertragen worden ist, und
- wobei alle Bestandteile der Zündeinrichtung in einem gemeinsamen Zündkörper untergebracht sind.

2. Zündeinrichtung nach Anspruch 1,
**dadurch gekennzeichnet**,
- daß im elektronischen Schloß (4) wenigstens ein bestimmter Wert oder Zustand fest abgespeichert ist, und die Ansteuerung des Schalters (3) dann geschieht, wenn wenigstens ein den Zeitverlauf des Entriegelungssignals (9X, 9A) charakterisierender Wert mit dem wenigstens einen fest abgespeicherten Wert im wesentlichen übereinstimmt.

3. Zündeinrichtung nach Anspruch 1,
**dadurch gekennzeichnet**,
- daß besagtes Entriegelungssignal (9X) an das elektronische Schloß unabhängig von dem zur Aktivierung des Zündelements (2) vorgesehenen Zündsignal (9B) übertragbar ist.

4. Zündeinrichtung nach Anspruch 3,
**dadurch gekennzeichnet**,
- daß besagtes Entriegelungssignal (9X) an das elektronische Schloß leitergebunden (z.B. mittels Licht, Hochfrequenz) übertragbar ist.

5. Zündeinrichtung nach Anspruch 3,
**dadurch gekennzeichnet**,
- daß besagtes Entriegelungssignal (9X) an das elektronische Schloß leiterungebunden (z.B. mittels freier elektromagnetischer Wellen oder wenigstens einem spezifischen Schallimpuls) übertragbar ist.

6. Zündeinrichtung nach Anspruch 1,
**dadurch gekennzeichnet**,
- daß der Signaleingang (7A) des elektronischen Schlosses (4) den wenigstens zwei Zündanschlüssen (5, 6) der Zündeinrichtung (1A) elektrisch parallel geschaltet ist und über besagte Anschlüsse sowohl das spezifische Entriegelungssignal (9A) als auch das zur Aktivierung des Zündelements (2) vorgesehene Zündsignal (9B) an die Einrichtung (1A) übertragbar ist.

7. Zündeinrichtung nach Anspruch 2 oder 6,
**dadurch gekennzeichnet**,
- daß das Entriegelungssignal (9X, 9A) aus einem seriellen Bitmuster besteht und daß besagter fest abgespeicherte Wert ein Digitalwort ist, welches diesem Bitmuster entspricht.

8. Zündeinrichtung nach Anspruch 7,
**dadurch gekennzeichnet**,
daß das Zündsignal (9B) aus wenigstens einem Impuls besteht, welcher an das das Entriegelungssignal (9A) repräsentierende serielle Bitmuster anschließt.

9. **9.** Zündeinrichtung nach Anspruch 2 oder 6,
**dadurch gekennzeichnet**,
- daß das Entriegelungssignal (9X, 9A) eine Wechselgröße mit vorbestimmter Periodendauer ist und daß besagter fest abgespeicherte Wert ein dieser Periodendauer entsprechendes Zeitmaß ist.

10. Zündeinrichtung nach Anspruch 9,
**dadurch gekennzeichnet**,
daß sowohl ihr Entriegelungssignal (9A) als auch ihr Zündsignal (9B) aus einer Wechselspannung oder einem Wechselstrom bestehen, die/der wenigstens bis zur Entriegelung des elektronischen Schlosses eine Periodendauer aufweist, die mit einem im elektronischen Schloß gespeicherten Zeitmaß weitgehend übereinstimmt.

11. Zündeinrichtung nach Anspruch 2 oder 6,
**dadurch gekennzeichnet**,
- daß das Entriegelungssignal (9X, 9A) eine gepulste Wechselgröße (Burst) mit vorbestimmter Puls- oder Pausendauer ist und daß besagter fest abgespeicherte Wert ein dieser Puls- oder Pausendauer entsprechendes Zeitmaß ist.

12. Zündeinrichtung nach Anspruch 1,
**dadurch gekennzeichnet**,
- daß die Zündeinrichtung (1A) neben zwei elektrischen Zündanschlüssen (5, 6) zur Strombeaufschlagung des Schmelzleiters noch einen dritten elektrischen Anschluß (11) zur Betriebsstromversorgung des elektronisches Schlosses (4) aufweist.

13. Zündeinrichtung nach Anspruch 1,
**dadurch gekennzeichnet**,
- daß die Zündeinrichtung (1A) nur zwei elektrische Anschlüsse (5, 6) aufweist, und daß sie weiter umfaßt
- eine zwischen die beiden Zündanschlüsse (5, 6) geschaltete Serienschaltung aus einem Kondensator (19) und einem Entkopplungsbauelement (18), wobei besagter Kondensator (19) den Versorgungsklemmen des elektronischen Schlosses (4) parallelgeschaltet ist.

14. Zündeinrichtung nach Anspruch 13,
**dadurch gekennzeichnet**,
- daß das Entkopplungsbauelement entweder eine Diode oder ein Widerstand ist.

15. Zündeinrichtung nach Anspruch 1,
**dadurch gekennzeichnet**,
- daß das elektronische Schloß als integrierte CMOS-Schaltung und der Schalter (3) als Halbleiterschalter, beispielsweise als Bipolar- oder Feldeffekttransistor oder als Thyristor, ausgebildet ist.

16. Zündeinrichtung nach Anspruch 14,
**dadurch gekennzeichnet**,
- daß der Schalter (3), das elektronische Schloß (4) und das Entkopplungsbauelement (18) monolithisch realisiert sind.

17. Zündeinrichtung nach Anspruch 1,
**dadurch gekennzeichnet**,
- daß alle Bestandteile der Zündeinrichtung in enger Nachbarschaft angeordnet sind so, daß nur ein Ende des

18. Zündeinrichtung nach Anspruch 16,
**dadurch gekennzeichnet**,
- daß der Schmelzleiter als Schleife eines die monolithische Schaltung kontaktierenden Bondleiters ausgeführt ist, und daß besagte Schleife in gutem thermischen Kontakt mit besagtem Zündstoff angeordnet ist.

19. Zündeinrichtung nach einem der vorhergehenden Ansprüche,
**dadurch gekennzeichnet**,
- daß der elektrische Schalter (3) nach Empfang des Entriegelungssignals nur eine definierte Zeit im durchgeschalteten Zustand gehalten wird.

## Claims

1. Ignition device for Gafety equipment in vehicles, with a pyroelectric ignition means, which contains a fuse which can be heated by the flow of electric current and a combustible material which is in thermic contact with said fuse, with at least two ignition connections, wherein the said ignition device further comprises an electrically controlled switch (3), the connecting length of which is connected in series to the said fuse, and an electrical lock (4), the output of which is actively connected to the control input of the said switch, the switch (3) of the said lock (4) being pilottable in the sense of a through switching of its connecting length, if an unlocking signal (9X; 9A) has been transmitted to the electronic lock with an ignition signal (9B) provided for the activation of the fuse, at the latest at the time of application of the device (1, 1A), all components of the ingnition device being brought together in a common ignition body.

2. Ignition device in accordance with claim 1 wherein at least a set value or state is constantly stored in the electronic lock (4), and the pilotting of the switch (3) occurs when at least a value characterizing the duration of the unlocking signal (9X, 9A) essentially corresponds with the at least one constantly stored value.

3. Ignition device in accordance wiuth claim 1 wherein the said unlocking signal (9X) can be transmitted to the electronic lock independently of the ignition signal (9B) provided for the activation of the ignition means (2).

4. Ignition device in accordance with claim 3 wherein the said unlocking signal (9X) can be transmitted to the electronic lock by means of a conduction connection (eg. by means of light or high frequency).

5. Ignition device in accordance with claim 3 wherein the unlocking signal (9X) can be transmitted to the electronic lock by means of a conduction connection (eg. by means of free electromagnetic waves or at least a specific sonic pulse).

6. Ignition device in accordance with claim 1 wherein the input to the signal (7A) of the electronic lock (4) is connected in parallel to the at least two ignition connections (5, 6) of the ignition device (1A) and the specific unlocking signal (9A) as well as the ignition signal (9B) provided for the activation of the ignition element (2) can be transmitted to the device (1A) by means of the said connections.

7. Ignition device in accordance with either of claims 2 or 6 wherein the unlocking signal (9X, 9A) consists of a bit pattern series and the said constantly stored value is a digital word which corresponds to this bit pattern.

8. Ignition device in accordance with claim 7 wherein the ignition signal (9B) consists of at least one pulse which follows the the bit pattern series which represents the unlocking signal (9A).

9. Ignition device in accordance with either of claims 2 or 6 wherein a change in magnitude with a pre-determined duration is the unlocking signal (9X, 9A) and the said constantly stored value is a time period corresponding to this duration.

10. Ignition device in accordance with claim 9 wherein its unlocking signal (9A) as well as its ignition signal (9B) consist of a change in voltage or a chance in electrical current which lasts at least until the unlocking of the electronic lock, this duration essentially corresponding to a time period stored in the electronic lock.

11. Ignition device in accordance with either of claims 2 or 6 wherein the unlocking signal (9X, 9A) is a pulsed change in magnitude (burst) with a pre-determined pulse or interval duration and the said constantly stored value is a time period corresponding to this pulse or interval duration.

12. Ignition device in accordance with claim 1 wherein the ignition device (1A) has a third electrical connection (11) for the electricity supply of the electronic lock (4), for applying current to the fuse, next to two electrical ignition connections (5, 6) .

13. Ignition device in accordance with claim 1 wherein the ignition device (1A) has only two electrical connections (5, 6) and these further include a connected circuit in series made up of a condenser (19) and a disconnection component (18), between the two ignition connections (5, 6), the said condenser (19) being connected in parallel to the terminals of the electronic lock (4).

14. Ignition device in accordance with claim 13 wherein the disconnection component is either a diode or a resistor.

15. Ignition device in accordance with claim 1 wherein the electronic lock is developed as an integrated CMOS circuit arrangement and the switch (3) is developed as a semiconductor switch, as bipolar transistor or field effect transistor or as a thyristor, for example.

16. Ignition device in accordance with claim 14 wherein the switch (3), the electronic lock (4) and the disconnection component (18) are realized monolithically.

17. Ignition device in accordance with claim 1 wherein all components of the ignition device are disposed such that they are positioned very close to each other, and only one end of the fuse of the ignition element (2) is electrically accessible.

18. Ignition device in accordance with claim 16 wherein the fuse is effected as a loop of one of the bond conductors which make contact with the monolithic circuit arrangment, and the said loop is disposed in good thermic contact with the said combustible material.

19. Ignition device in accordance with any of the foregoing claims wherein the electrical switch (3) is only kept in the switched-through state for a specific time after reception of the unlocking signal.

## Revendications

1. Dispositif d'amorçage pour des dispositifs de protection dans des véhicules, comportant un élément d'amorçage pyroélectrique, qui contient un conducteur fusible pouvant être chauffé par un flux de courant, et un explosif d'amorçage placé en contact thermique avec ce conducteur, comportant au moins deux bornes d'amorçage, caractérisé en ce qu'il comporte en outre
- un interrupteur électrique (3) commandable électriquement et dont la section de coupure est branchée en série avec ledit conducteur fusible;
- un verrou électronique (4), dont la sortie est reliée selon une liaison active à l'entrée de commande dudit interrupteur,
- l'interrupteur (3) pouvant être commandé par ledit verrou électronique (4) dans le sens d'une fermeture de sa section de coupure lorsqu'un signal de déverrouillage (9X;9A) a été transmis au verrou électronique (4) au plus tard lorsque le dispositif (1,1A) est chargé par un signal d'amorçage (9B) destiné à activer le conducteur fusible, et
- tous les composnts du dispositif d'amorçage étant logés dans un corps d'amorçage commun.

2. Dispositif d'amorçage selon la revendication 1, caractérisé en ce
- qu'au moins une valeur déterminée ou un état déterminé est mémorisé de façon fixe dans le verrou électronique (4) et que la commande de l'interrupteur (3) intervient lorsqu'au moins une valeur, qui caractérise l'allure dans le temps du signal de déverrouillage (9X,9A), coincide pour l'essentiel avec au moins une valeur mémorisée de façon fixe.

3. Dispositif d'amorçage selon la revendication 1, caractérisé en ce
- que ledit signal de déverrouillage (9X) peut être transmis au verrou électronique indépendamment du signal d'amorçage (9B) destiné à activer l'élément d'amorçage (2).

4. Dispositif d'amorçage selon la revendication 3, caractérisé en ce
- que ledit signal de déverrouillage (9X) peut être transmis au verrou électronique d'une manière liée à un conducteur (par exemple au moyen d'une lumière, d'une haute fréquence).

5. Dispositif d'amorçage selon la revendication 3, caractérisé en ce
- que ledit signal de déverrouillage (9X) peut être transmis au verrou électronique, d'une manière non liée à un conducteur (par exemple au moyen d'ondes électromagnétiques libres ou d'au moins une impulsion acoustique spécifique).

6. Dispositif d'amorçage selon la revendication 1, caractérisé en ce
- que l'entrée (7A) des signaux du verrou électronique (4) est branchée électriquement en parallèle avec au moins deux bornes d'amorçage (5,6) du dispositif d'amorçage (lA) et qu'aussi bien le signal de déverrouillage spécifique (9A) que le signal d'amorçage (9B) destiné à activer l'élément d'amorçage (2) peuvent être transmis par l'intermédiaire desdites bornes au dispositif (1A).

7. Dispositif d'amorçage selon la revendication 2 ou 6, caractérisé en ce
- que le signal de déverrouillage (9X,9A) est constitué par un profil binaire en série et que ladite valeur mémorisée de façon fixe est un mot numérique, qui correspond à ce profil binaire.

8. Dispositif d'amorçage selon la revendication 7, caractérisé en ce que le signal d'amorçage (9B) est constitué par au moins une impulsion, qui se raccorde au profil binaire en série qui représente le signal de déverrouillage (9A).

9. Dispositif d'amorçage selon la revendication 2 ou 6, caractérisé en ce
- que le signal de déverrouillage (9X,9A) est une grandeur alternative possédant une période d'une durée prédéterminée et que ladite valeur mémorisée de façon fixe est une valeur de temps correspondant à la durée de cette période.

10. Dispositif d'amorçage selon la revendication 9, caractérisé en ce qu'aussi bien son signal de déverrouillage (9A) que son signal d'amorçage (9B) sont constitués par une tension alternative ou un courant alternatif, qui possède, au moins jusqu'au verrouillage du verrou électronique, une durée de période, qui coïncide dans une large mesure avec une valeur de temps mémorisée dans le verrou électronique.

11. Dispositif d'amorçage selon la revendication 2 ou 6, caractérisé en ce
- que le signal de déverrouillage (9X,9A) est une grandeur alternative pulsée (rafale) possédant une durée prédéterminée d'impulsion ou de pause et que ladite valeur mémorisée de façon fixe est une valeur de temps correspondant à cette durée d'impulsion ou de pause.

12. Dispositif d'amorçage selon la revendication 1, caractérisé en ce
- que le dispositif d'amorçage (1A) comporte, en dehors de deux bornes électriques d'amorçage (5,6) pour charger en courant le conducteur fusible, également une troisième borne électrique (11) pour l'alimentation en courant de service du verrou électronique (4).

13. Dispositif d'amorçage selon la revendication 1, caractérisé en ce
- que le dispositif d'amorçage (1A) comporte seulement deux bornes électriques (5,6), et qu'il comporte en outre
- un circuit série branché entre les deux bornes d'amorçage (5,6) et constitué par un condensateur (19) et un composant de découplage (18), ledit condensateur (19) étant branché en parallèle avec les bornes d'alimentation du verrou électronique (4).

14. Dispositif d'amorçage selon la revendication 13, caractérisé en ce
- que le composant de découplage est soit une diode, soit une résistance.

15. Dispositif d'amorçage selon la revendication 1, caractérisé en ce
- que le verrou électronique est réalisé sous la forme d'un circuit CMOS intégré et que l'interrupteur (3) est réalisé sous la forme d'un interrupteur à semiconducteurs, par exemple sous la forme d'un transistor bipolaire ou d'un transistor à effet de champ ou sous la forme d'un thyristor.

16. Dispositif d'amorçage selon la revendication 14, caractérisé en ce
- que l'interrupteur (3), le verrou électronique (4) et le composant de découplage (18) sont réalisés de façon monolithique.

17. Dispositif d'amorçage selon la revendication 1, caractérisé en ce
- que tous les composants du dispositif d'amorçage sont disposés dans un voisinage étroit de telle sorte que seule une extrémité du conducteur fusible de l'élément d'amorçage (2) est accessible électriquement.

18. Dispositif d'amorçage selon la revendication 16, caractérisé en ce
- que le conducteur fusible est réalisé sous la forme d'une boucle d'un conducteur de liaison, qui établit un contact avec le circuit monolithique, et que ladite boucle est disposée de manière à établir un bon contact thermique avec ledit explosif d'amorçage.

19. Dispositif d'amorçage selon l'une des revendications précédentes, caractérisé en ce
- que, après la réception du signal de déverrouillage, l'interrupteur électrique (3) n'est maintenu dans l'état fermé que pendant un intervalle de temps défini.
